# EUROPEAN PATENT SPECIFICATION

(11) **EP 3 069 402 B1**
(45) Date of publication and mention of the grant of the patent: **06.09.2017**
(21) Application number: 14796872.1
(22) Date of filing: 07.11.2014
(51) Int. Cl.: H01M 8/0438, H01M 8/0444, H01M 8/18, H01M 8/20, H01M 4/90, H01M 8/04537

(54) **FUEL CELL ASSEMBLY AND METHOD FOR OPERATING THE SAME BY MONITORING OXIDATION STATES**
BRENNSTOFFZELLENANORDNUNG UND VERFAHREN ZUM BETREIBEN DERSELBEN DURCH ÜBERWACHUNG VON OXIDATIONSSTUFEN
ENSEMBLE PILE À COMBUSTIBLE ET SON PROCÉDÉ DE MISE EN FONCTIONNEMENT PAR SURVEILLANCE D'ÉTATS D'OXYDATION

(30) Priority: 12.11.2013 GB 201319966
(43) Date of publication of application: 21.09.2016
(73) Proprietor: ACAL Energy Limited, Cheshire WA7 4QX (GB)
(72) Inventor: LONGMAN, Robert, Runcorn Cheshire WA7 4QX (GB)
(74) Representative: Potter, Julian Mark
(86) International application number: PCT/GB2014/053322
(87) International publication number: WO 2015/071645

(56) References cited:
- GB-A- 2 500 031
- US-A- 4 396 687
- US-A1- 2004 126 641

## Description

### Field

The present invention relates to a fuel cell assembly and method of operation of a fuel cell assembly. In particular, but not exclusively, embodiments of the present invention relate to a stack comprising a plurality of such fuel cell assemblies, to use of such a fuel cell assembly or such a stack, and to an electronic, automotive or stationary power such as combined heat and power or generator equipment comprising such a fuel cell assembly.

### Background

Published international patent applications WO2010/128333, WO2011/107794 and WO2011/107795 disclose redox fuel cells in which a regeneration zone is provided for the oxidative regeneration of a redox active species which has been reduced at the cathode in operation of the cell. These fuel cells may use hydrogen as a fuel with air or oxygen as oxidant. The operation of indirect redox fuel cells of these types is such that the oxidant is not supplied directly to the electrode but instead reacts with the reduced form of a redox couple in the catholyte to oxidise the redox couple, and this oxidised species is fed to the cathode of the fuel cell. In the regenerator, the catholyte comes into contact with an oxidant such as air or oxygen and is regeneratively oxidised before flowing back to the fuel cell. The oxidant may be a mixture of gases including oxygen, such as air, and the term "air" may be used when describing embodiments of the invention for convenience and brevity however a person of ordinary skill in the art will recognise that embodiments are not limited to the use of air as an oxidant.

WO2011/107794 is to some extent concerned with the oxidative regeneration of the redox active species in a regeneration zone and describes the basic principles of liquid flow past a porous element through which gas is injected into the liquid thus creating high interfacial area between the gas and liquid phases by generating many small bubbles each having a gas-liquid interfacial membrane.

There are a number of constraints on this step of oxidising the redox couple. Oxidation of the redox couple should occur as rapidly as possible as a reduction in flow rate of the catholyte through the cathode will reduce the rate of energy production. The rate of energy production will also be reduced if oxidation of the redox couple is not as complete as possible, i.e. if a significant proportion of the redox couple remains unoxidised. The provision of apparatus which rapidly and completely oxidises redox couples present in catholyte solutions is made challenging by the need to ensure that the energy consumed ("parasitic load)" when the oxidation step is taken is relatively low, otherwise the overall power generation performance of the fuel cell will be reduced. Additionally, the apparatus used to oxidise the redox couple should be as compact as possible, especially when the fuel cell is intended for use in portable or automotive applications.

In the case of a fuel cell assembly having pressurised air or gas for the supply of oxidant the energy required to compress the air supply is a significant part of the parasitic load. For example, an air compressor for a 100 kW electrical output system operating at a pressure of 2 bar gauge requires about 15 kW of electrical energy thus reducing the available electrical output and system efficiency of the fuel cell assembly. That is to say, if 100 kW power output is required from the fuel cell assembly for running the application load, the fuel cell assembly must be capable of producing at least 115 kW of power to cope with the parasitic load without detriment to providing power to the application load. Additionally, in a typical fuel cell application there is a need to run the fuel cell at a wide range of electrical power outputs since the load will vary from time to time.

Under typical operating conditions for a fuel cell the amount of air supplied, i.e. flow rate, to provide an oxidation rate to compensate for the reduction rate at the cathode will often be lower than the minimum flow rate a compressor can operate at with a reasonable efficiency, for example an efficiency greater than 43% although as high as possible efficiency is desirable. Furthermore, the pressure must be sufficient for effective oxidation of the electrolyte setting a minimum pressure for operation of the fuel cell which places a further constraint on the operation of the compressor. A common occurrence is that the compressor is operated such that there is an oversupply of oxidant in order to meet at least the minimum operating parameters of the fuel cell in terms of the supply of oxidant (flow rate) to meet the maximum load and oxidant pressure for achieving effective regenerative oxidation of the electrolyte.

Aspects and embodiments of the invention were devised with the foregoing in mind.

### Summary

Viewed from a first aspect, the present invention provides a fuel cell assembly comprising an electrode in a reaction region, the assembly configured with an electrolyte flow path for flowing communication of an electrolyte with the electrode, a supply device for controllably supplying a regeneration component to the electrolyte and a monitor device operable to monitor the oxidation state of the electrolyte wherein the electrolyte comprises a redox couple, the oxidation state of which changes with both reaction at the electrode and contact with the regeneration component.

This assembly allows the oxidation state of the electrolyte as a whole (determined by the ratio of oxidised redox couples to reduced redox couples) to be monitored during use. This means that the oxidation state of the electrolyte can be monitored to determine if it is within desired limits.

The monitor device may be configured to output a signal representative of the oxidation state of the electrolyte. The signal is configured to be indicative of the oxidation state of the electrolyte falling within a range or more particularly a desired range. This signal allows the oxidation state of the electrolyte to be monitored during use, for example by electronic equipment such as computing apparatus or other control electronics, so that it can be maintained within desired limits.

The supply device may be configured to be responsive to the output of the signal to control supply of the regeneration component to the electrolyte. In this way, the oxidation state of the electrolyte can be varied depending on the signal from the monitor device, as the regeneration component changes the oxidation state of the electrolyte. The supply device may be configured to directly receive the output signal and respond to it to control the supply of the regeneration component. Optionally, the output signal is supplied to control apparatus such as computing apparatus or other control electronics which subsequently send a control signal to the supply device to control the supply of the regeneration component to the electrolyte.

The signal may comprise a first component indicative of the oxidation state of the electrolyte exceeding an upper threshold and a second component indicative of the oxidation state of the electrolyte descending through a lower threshold. This allows both an upper and a lower threshold to be defined and monitored so that the oxidation state of the electrolyte can be maintained between the two. These limits could be changed, for example to optimise performance at different temperatures or redox couple concentrations or on start up or shut down.

An analogue signal corresponding to oxidation state and a temperature or concentration measurement can be combined in this way. Additionally, a common method of measuring oxidation state has a concentration and strong temperature dependence which can therefore be compensated. Temperature may be measured by any convenient sensor such as a thermocouple or thermistor. Pressure may be measured by any convenient sensor such as a piezo-resistive sensor. The concentration of the redox couple in the electrolyte can be controlled by the addition of water, optionally from a condenser unit within the fuel cell assembly. The concentration can be measure by a number of convenient methods including liquid level sensing or density measurement.

The upper and/or the lower thresholds may be determined to maximise the efficiency of the change in the oxidation state of the electrolyte when the regeneration component is supplied. The rate of change in oxidation state decreases as the oxidation state of the electrolyte increases. It is therefore beneficial to maintain the oxidation state of the electrolyte below 100% so that the rate of change in oxidation state can be optimised. However, the oxidation state should not be kept at too low a level, as this may affect the rate of reaction at the electrode thereby inhibiting or reducing generation of power.

The upper and lower thresholds respectively define switch parameters for the supply device for supplying the regeneration component to the electrolyte at the optimal rate. That is to say, the upper and lower thresholds defined values responsive to which the operation of the supply device will change or intermediate control apparatus such as a computing apparatus or control electronics will respond to by sending a control signal to the supply device.

The fuel cell assembly may be configured to supply the regeneration component such that the oxidation state of the electrolyte is maintained above the lower threshold. Additionally or alternatively, the fuel cell assembly may be configured to supply the regeneration component such that the oxidation state of the electrolyte is maintained below the upper threshold. In this way, the oxidation state of the electrolyte may be maintained above a lower threshold, below an upper threshold or between the two, so as to optimise the efficiency of the reactions within the fuel cell.

The supply device may be configured to be responsive to the output of the first component and/or the second component to change supply of the regeneration component to the electrolyte. Depending on the system, the supply may be increased or decreased, or turned off altogether, in response to the first component and/or the second component.

The first and second components may be separate signals. That is to say, the first and second components are output on separate signal pathways. This may be convenient if a particular component causes a single operation, for example the supply device or control system being configured so that the first component always reduces the supply of the regeneration component and vice versa for the second component. In a particular embodiment in which the first and second components are output on separate signal pathways the monitor device may comprise two units, a first unit configured to output the first component and a second unit configured to output the second component.

The signal may be an electrical or electronic signal which are convenient types of signal to be input to control circuitry or apparatus.

The fuel cell assembly may further comprise a reaction module in the electrolyte flow path, the reaction module including an inlet for the supply of the regeneration component under control of the supply device. This allows the reaction module and the reaction region containing the electrode to be individually maintained at the optimum conditions for the reactions that occur in each of these parts. These reaction conditions may be the same or may differ, particularly regarding temperature.

The monitor device may be disposed in the electrolyte flow path between the output of the reaction module and the input to the reaction region. In a particular embodiment, the monitor device may be disposed proximal the reaction module. This ensures that the supply of regeneration component can be changed as soon as the oxidation state of the electrolyte increases above an upper threshold or decreases below a lower threshold, in order to maintain the oxidation state of the electrolyte within the desired range. Suitably, the monitor device is disposed after the reaction module relative to the direction of electrolyte flow which provides for a more immediate control of the oxidation state in the electrolyte. Alternatively, the monitor device may be placed after the electrode.

If the monitor device is placed away from the reaction region, compensation for the delay between the electrolyte reaching the monitor device and leaving the reaction module must be made. This is because the supply of regeneration component will continue at its previous state until the monitor device signals otherwise, so the electrolyte in the region between the monitor device and the reaction region will be above or below the threshold at the point where the monitor device signals to the supply device.

The supply device may be operated at an optimal rate when supplying the regeneration component to the electrolyte. In one embodiment, for a period of time, the rate of change of the oxidation state of the electrolyte on contact with the regeneration component is not the same as the rate of change of the oxidation state of the electrolyte on reaction at the electrode. This may be due to the supply of regeneration component being greater than that required to compensate for the reaction at the electrode when the supply device is operated at its optimal rate. In an embodiment, the optimal rate may result in supply of the regeneration component to the electrolyte resulting in a change in oxidation state at a rate faster than the change in oxidation state caused by the reaction at the electrode.

The optimal operating point of a supply device configured as a compressor may be a function of the gas pressure at which the compressed gas is being supplied to the fuel cell assembly and the flow rate of gas to the fuel cell assembly.

The redox couple may comprise a polyoxometallate species. Such redox couples are well known in the art for use in fuel cell assemblies similar to that of the present invention.

The regeneration component may be gaseous. In one embodiment, the regeneration component is supplied to the fuel cell as a compressed gas. The supply device may comprise a gas compressor. The compression of the gas increases the inefficiency of the device and means that it is harder to run the supply device at the low rates required to merely compensate for the reaction of the redox couple at the electrode. In this case, the benefits of measuring the oxidation state of the electrolyte and increasing and decreasing the supply of regeneration component accordingly are emphasised.

In one embodiment, the electrode is a cathode, the reaction region is a cathode region and the electrolyte is a catholyte. In this case, the regeneration component may comprise an oxidant, which may be a gas containing oxygen, such as oxygen gas or air and/or hydrogen peroxide. In this case, the supply of regeneration component to the redox couple in the electrolyte oxidises the redox couples, thereby increasing the oxidation state of the electrolyte.

The supply device may be configured to be responsive to a signal indicative of the oxidation state of the catholyte exceeding an upper threshold to decrease supply of the regeneration component to the catholyte. Decreasing the supply of the regeneration component to the catholyte will stop the increase in oxidation state of the electrolyte. The overall oxidation state of the electrolyte will therefore start to decrease as the redox couples are reduced at the cathode.

The supply device may be configured to be responsive to a signal indicative of the oxidation state of the catholyte descending a lower threshold to increase supply of regeneration component to the catholyte. Increasing the supply of the regeneration component to the catholyte will start to increase the oxidation state of the electrolyte. If the supply device is run at a rate higher than that required to merely balance the reduction of the redox couples at the cathode, the overall oxidation state of the electrolyte will therefore start to increase.

In order to maintain the optimum reaction rate at the cathode, the oxidation state of the catholyte may be maintained above a lower threshold of from 40% to 70% oxidised redox couple. Further, in order to maintain the optimum reaction rate on contact with the regeneration component, the oxidation state of the catholyte may be maintained below an upper threshold of from 60% to 85%, in particular 80%, oxidised redox couple.

In another embodiment, the electrode is an anode, the reaction region is an anode region and the electrolyte is an anolyte. The regeneration component may be a fuel which reduces the redox couple in the anolyte, such a hydrogen or carbon monoxide. In this case, contact of the redox couples in the anolyte will reduce the redox couples, causing a reduction in the oxidation state of the anolyte.

The supply device may be configured to be responsive to a signal indicative of the oxidation state of the anolyte exceeding an upper threshold to increase supply of the regeneration component to the anolyte. Increasing the supply of the regeneration component to the anolyte will start to decrease the oxidation state of the electrolyte. If the supply device is run at a rate higher than that required to merely balance the reduction of the redox couples at the anode, the overall oxidation state of the electrolyte will therefore start to decrease.

The supply device may be configured to be responsive to a signal indicative of the oxidation state of the anolyte descending a lower threshold to decrease supply of regeneration component to the anolyte. Decreasing the supply of the regeneration component to the anolyte will stop the decrease in oxidation state of the electrolyte. The overall oxidation state of the electrolyte will therefore start to increase as the redox couples are oxidised at the anode.

The reaction region may comprise one or more electrodes.

Viewed from a second aspect, the present invention provides a method of operating a fuel cell assembly comprising the steps of monitoring the oxidation state of the electrolyte and changing the supply of the regeneration component when the oxidation state of the electrolyte falls below a lower threshold and/or rises above an upper threshold. In this way, the oxidation state of the electrolyte may be maintained at a level optimal for the reactions occurring within the fuel cell.

The upper and/or the lower thresholds may be determined to maximise the efficiency of the change in oxidation state of the electrolyte when the regeneration component is supplied. The rate of change in oxidation state of the electrolyte decreases as the oxidation state increases. It is therefore beneficial to maintain the oxidation state of the electrolyte below the maximum level.

The supply device may be operated at an optimal rate when supplying the regeneration component to the electrolyte for improving the efficiency of the system. In many cases, the optimal rate for the supply device is greater than that required to compensate for the reaction at the electrode. In this case, for a period of time, the rate of change of the oxidation state of the electrolyte on contact with the regeneration component is not the same as the rate of change of the oxidation state of the electrolyte on reaction at the electrode. Often, for a period of time, the rate of change of the oxidation state of the electrolyte on contact with the regeneration component is greater than the rate of change of the oxidation state of the electrolyte on reaction at the electrode.

The supply device may be configured to be responsive to the output of a signal from the monitor device to control supply of the regeneration component to the electrolyte. In this way, the oxidation state of the electrolyte can be varied depending on the signal from the monitor device, as the regeneration component changes the oxidation state of the electrolyte.

The signal may comprise a first component indicative of the oxidation state of the electrolyte exceeding an upper threshold and a second component indicative of the oxidation state of the electrolyte descending a lower threshold. This allows both an upper and a lower threshold to be defined and monitored, so that the oxidation state of the electrolyte can be maintained between the two.

The upper and lower thresholds may respectively define switch parameters for the supply device for supplying the regeneration component to the electrolyte at the optimal rate.

The supply device may be switched from a first state to a second state on a signal from the monitor device.

In the first state, the supply device may operate at its optimal rate to supply the regeneration component to the electrolyte and in the second state no regeneration component may be supplied to the electrolyte. This improves the overall efficiency of the system by allowing the supply device to operate at its optimal rate or efficiency, and subsequently using the reserve of oxidation power in the electrolyte in the form of the oxidised redox couples to keep the system running until the supply device is once again turned on.

Viewed from a third aspect, the present invention provides a fuel assembly comprising: a liquid electrolyte; anode and cathode electrodes; a regenerator unit for generating the liquid electrolyte following reaction with the electrodes; a flow circuit configured to transport the liquid electrolyte from interaction with the electrodes to the regenerator unit for regeneration of the liquid electrolyte and return regenerated liquid electrolyte to interaction with the electrodes; and a supply of regeneration material to the regeneration unit, wherein the supply of regeneration material is optimisable to balance the supply of regeneration material to liquid electrolyte with the amount of regeneration material required to return the liquid electrolyte to a state for efficiently supporting interaction between the liquid electrolyte and electrodes.

### List of Figures

One or more embodiments of the present invention will now be described, by way of example only, with reference to the following figures, in which:
Figure 1 illustrates a schematic view of a fuel cell assembly according to an embodiment of the present invention, in which the electrolyte is a catholyte;
Figure 2 illustrates a further schematic view of the fuel cell assembly of Figure 1;
Figure 3 illustrates a typical map of efficiency as a function of flow rate and pressure for an air compressor of the type Gen II supplied by Vortech;
Figure 4 illustrates the oxidation (regeneration) efficiency of a catholyte supplied with oxidant as a function of the oxidation state of the redox couple for a particular embodiment;
Figure 5 illustrates the change in redox couple oxidation state in the catholyte over time for the operation of a fuel assembly illustrated in Figures 1 and 2;
Figure 6 illustrates the improvement in efficiency produced by a fuel cell assembly illustrated in Figures 1 and 2;
Figure 7 illustrates schematic view of a fuel cell assembly according to an embodiment of the present invention, in which the electrolyte is an anolyte; and
Figure 8 illustrates a further schematic view of the fuel cell assembly of Figure 7.

### Specific Description

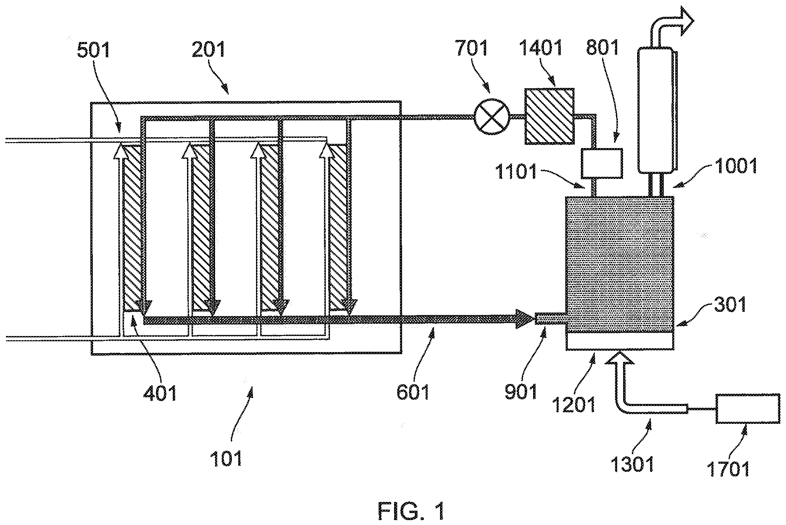

Figure 1 illustrates a fuel cell assembly 101 in accordance with an embodiment of the invention. The fuel cell assembly 101 comprises two major components: fuel cell stack 201 and regenerator section 301. Fuel cell stack 201 as illustrated comprises four membrane electrode assemblies 401. Each membrane electrode assembly 401 comprises an anode electrode (anode) defining an anode region, including a gas diffusion layer and a porous cathode electrode (cathode) defining a cathode region (none of which are shown). Each anode and each cathode are separated from one another by a polymer electrolyte membrane. Further details of the membrane electrode assembly may be found in International Patent Application Publication Number PCT/GB2007/050151 the disclosure of which is hereby incorporated by reference.

Channels 501 and 601 are schematically shown in Figure 1 and the arrows indicate the direction of electrolyte flow around the fuel cell 101. In the embodiment shown, channel 601 provides a catholyte to the cathodes within electrode assemblies 401, while channel 501 provides an anolyte to the anodes within electrode assemblies 401.

A catholyte, containing a redox couple, is supplied to the fuel cell stack 201 through recycle pump 701 along channel 601. The catholyte passes through the membrane electrode assembly 401 in flowing contact with the cathode and then leaves the fuel cell stack 201 via channel 601 and is supplied to regeneration section 301 through first inlet port 901. Regeneration section 301 is further supplied by supply device 1701 through inlet 1301 with a flow of oxidant in gaseous form. The oxidant passes through a porous member 1201 which creates bubbles of the gaseous oxidant which pass into the interior of the regeneration section 301 the arrangement for which is disclosed in International Patent Application Publication Number PCT/GB2011/050410, the disclosure of which is hereby incorporated by reference. Regeneration section also comprises exhaust 1001, through which waste products may be vented from the system.

The catholyte is then supplied to reservoir 1401 via outlet port 1101, passing monitor device 801, before being supplied into channel 601 and back through recycle pump 701. The use of a reservoir 1401 is particularly useful in allowing the manufacturer to minimise the volume of regeneration section 301.

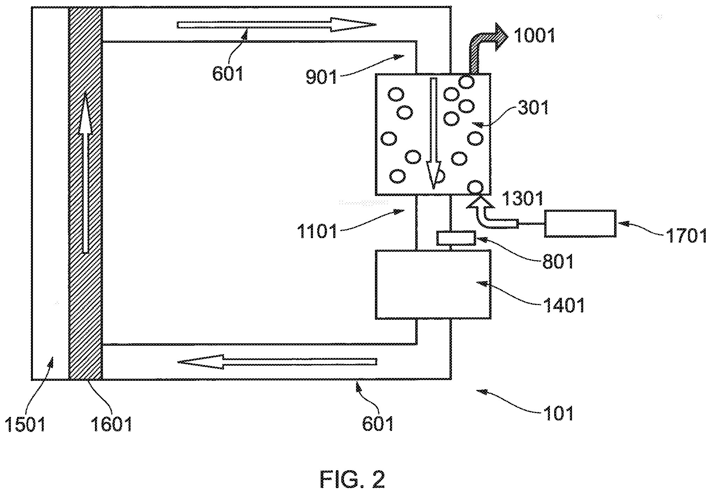

Figure 2 illustrates part of a membrane electrode assembly 401 of Figure 1, comprising a polymer electrolyte membrane 1501 adjacent porous cathode 1601, coupled to the catholyte channel 601 at the catholyte input and output of the cathode region. The regenerator section 301 is also illustrated. Polymer electrolyte membrane 1501 separates the cathode 1601 from the anode (not shown) and comprises a cation selective Nafion 112 membrane through which protons generated by the oxidation of a fuel at the anode (not shown) can pass. The catholyte leaves the membrane electrode assembly along channel 601 towards the regenerator section 301.

In operation of the fuel cell 101 illustrated in both Figures 1 and 2, the catholyte passes into porous cathode 1601 from the inlet channel 601. Electrons generated at the anode (not shown) by the oxidation of a fuel flow in an electrical circuit (not shown) and are returned to the cathode 1601. The redox couple in the catholyte is at least partially reduced by its reaction at the cathode 1601.

After reaction at the cathode 1601, the catholyte passes away from the cathode and out of the cathode region to the output section of channel 601 and onto regeneration section 301. The oxidant supplied to the regeneration section 301 acts to at least partially oxidise the redox couple in the catholyte, in accordance with the following (wherein Sp is the redox couple species and oxygen is the oxidant):

O₂ + 4Sp_{red} + 4H⁺ → 2H₂O + 4Spₒₓ

Some or all of the water vapour (produced by the above reaction) may be condensed in a condenser (not shown) and returned to the catholyte solution in order to assist in maintaining the humidity balance in the fuel cell 101. By-products produced during this reaction, such as heat and/or water vapour, may be vented via exhaust 1001.

The catholyte solution containing the redox couple in its regenerated oxidised state is recovered from regeneration section 301 through outlet port 1101. The regenerated catholyte passes monitor device 801 which senses the oxidation state of the redox couple within the catholyte solution. Typical monitor types include conductivity probes, optical density probes and electrochemical sensors. Additionally, the open circuit potential of the fuel cell may be used to measure oxidation state. Monitor device 801 outputs a signal representative of the oxidation state of the catholyte passing the monitor device 801. In the currently described embodiment the monitor output signal is indicative of whether the oxidation state falls within a pre-set range of oxidation states.

An oxidant supply device 1701 is electronically coupled to monitor device 801 to receive the output signal and is arranged to be responsive to the output signal to change the supply of oxidant to the regenerator section 301. If the signal indicates that the oxidation state has exceeded an upper threshold of the oxidation range, the supply device 1701 decreases the amount of oxidant being introduced to regeneration section 301. If the signal indicates that the oxidation state has fallen below a lower threshold of the oxidation range, the supply device 1701 increases the amount of oxidant being introduced to regeneration section 301. The signal may be a continuous signal or may comprise a first signal indicative of crossing the upper threshold in a direction of increasing oxidation level and a second signal indicative of crossing the lower threshold in a direction of decreasing oxidation level.

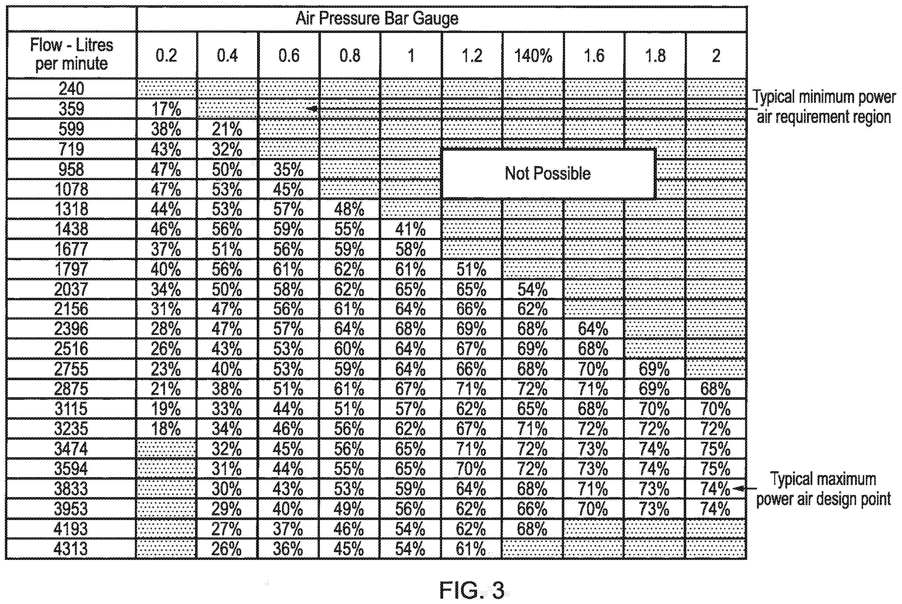

In the embodiment described with reference to a catholyte, the oxidant is compressed air. The air is compressed in a compressor before it is supplied to the regenerator section. Figure 3 shows a typical map of efficiency as a function of flow rate and pressure for an air compressor of the type Gen II supplied by Vortech. However, the actual efficiency distribution may vary between individual compressors. Supplying the oxidant as compressed air is a convenient way of introducing the air into the electrolyte so that it mixes well.

As can clearly be seen, the flow rates at which maximum efficiency can be obtained are significantly greater than the flow rates often required in a fuel cell, especially at low load where low flow rates are often desired while maintaining sufficient pressure to optimise the regeneration reaction. The typical minimum power air requirement is identified by the upper arrow in Figure 3 and the typical maximum power air point is identified by the lower arrow in Figure 3. For example, if the necessary pressure in the fuel cell is 0.6 bar, the minimum flow rate possible using the compressor of the described embodiment is 958 litres per minute. At low load, the required flow rate is only 359 litres per minute and so much of the 958 litres per minute will be wasted.

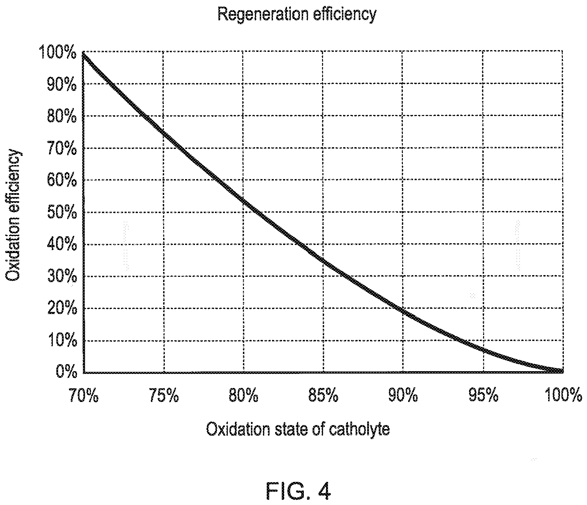

Figure 4 illustrates the oxidation (regeneration) efficiency of a catholyte supplied with oxidant as a function of the oxidation state of the redox couple for a particular embodiment. When the oxidation state is 100%, all of the redox couple in the catholyte is in its oxidised form. When the oxidation state is 0%, none of the redox couple in the catholyte is in its oxidised form. As can clearly be seen, oxidation efficiency decreases with increasing oxidation state.

Generally, as discussed above, a compressor will supply the oxidant to the regeneration section at a higher rate than required and so the oxidation state is likely to be close to 100%. The oxidation efficiency will therefore be low when the oxidant is supplied in too great an amount.

One or more embodiments of the present invention therefore aim to maintain the oxidation state of the redox couple between acceptable limits in order to obtain the desired oxidation efficiency (or reduction efficiency in the case of an anolyte), while utilising the compressor at its most efficient power-air point/s.

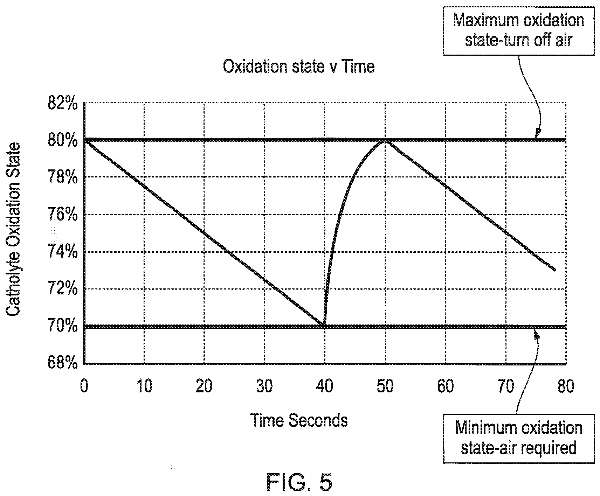

Figure 5 demonstrates the change in redox couple oxidation state in the catholyte over time for the operation of a fuel assembly in accordance with an embodiment of the present invention. In this embodiment the oxidation state is maintained between 70 and 80% in order to optimise the oxidation efficiency between about 98% and just over 50%. This is done by monitoring the oxidation state of the electrolyte and producing a signal that causes the supply of oxidant from the compressor to be turned on or off as required. Referring to the graph of Figure 5, at time equals 0 seconds the oxidation state of the electrolyte is 80% and the supply of the oxidant is turned off, i.e. the compressor is turned off. The oxidation state reduces to 70% over 40 seconds since between 0 and 40 seconds the compressor is off and so no oxidant is supplied to the catholyte. The oxidation state of the redox couple in the catholyte therefore decreases as the redox couple is reduced at the cathode.

At time equals 40 seconds, the oxidation state of the electrolyte breaches the lower threshold. This causes the monitor device to send a second signal to the supply device which responds by turning the compressor on in order to supply oxidant to the catholyte. Looking up the regeneration efficiency in the graph of Figure 4 it can be seen that the oxidation efficiency is close to 100% when the oxidation state of the catholyte is 70%. Therefore, by running the oxidation states between 80% and 70% the oxidation efficiency ranges between about 98% and just over 50%. The compressor is run at one of its most efficient levels and so supplies the oxidant at a rate much greater than required to balance the rate of reduction of the redox couple in the catholyte at the cathode. The oxidation state therefore rapidly increases. At 50 seconds, the oxidation state reaches the upper threshold. This causes a monitor device to send a second signal to the supply device, which responds by turning off the supply of oxidant to the catholyte. No oxidant is then supplied to the catholyte and so the oxidation state decreases once again.

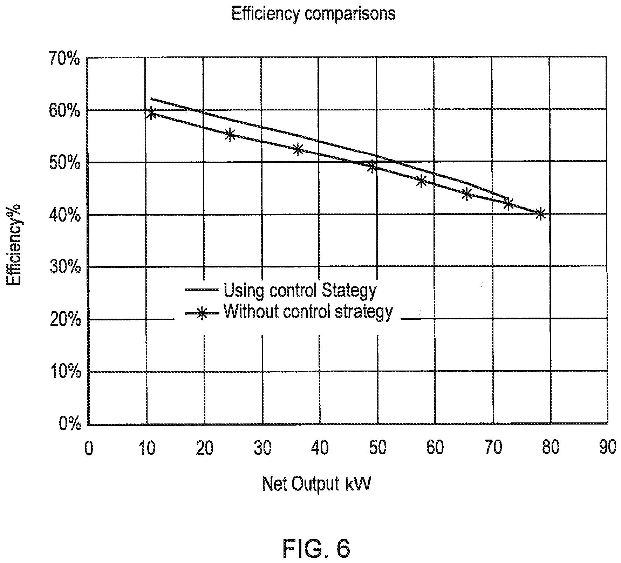

Running the fuel cell in this way increases the efficiency at all power outputs for a fuel cell in accordance with an embodiment of the present invention, as illustrated in Figure 6.

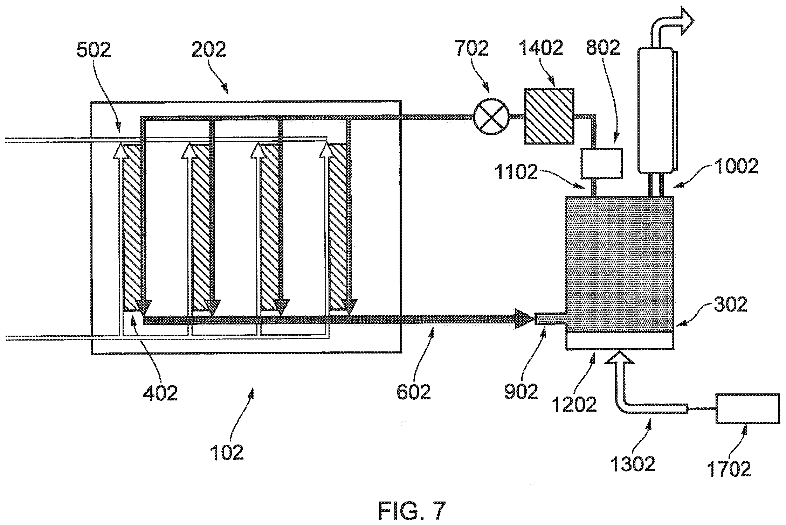

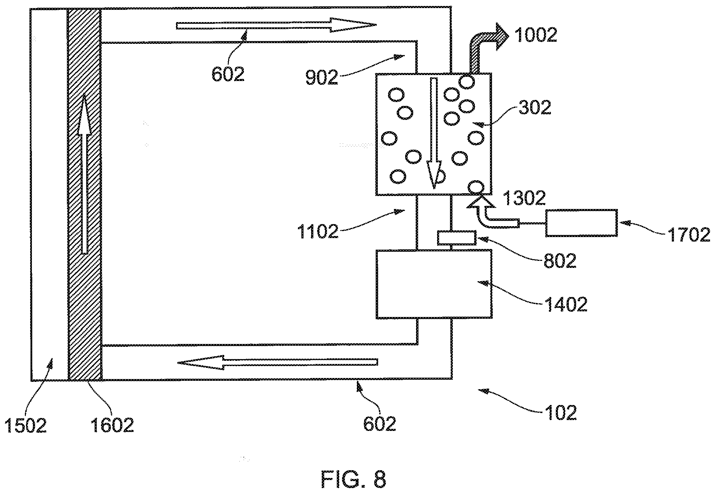

In another embodiment, as shown in Figures 7 and 8, the electrolyte is an anolyte instead of a catholyte and channel 602 provides the anolyte to the anode 1602 in the anode region of the membrane electrode assemblies 402. The redox couple present in the anolyte is at least partially oxidised by reaction at the anode 1602. Channel 602 then returns the anolyte through the return section of channel 602 via inlet port 902 to the regeneration section 302. In this embodiment regeneration section 302 is further supplied through inlet 1302 with a flow of a reductant fuel, which acts to at least partially reduce the redox couple of the anolyte returned to the regenerator. The reduction reaction may be in accordance with the following (wherein Sp is the redox couple species and carbon monoxide is the fuel):

CO + H₂O + 2Spₒₓ → CO₂ + 2Sp_{red} + 2H⁺

Optionally. the reduction reaction may be in accordance with the following (wherein Sp is the redox couple species and hydrogen is the fuel):

H₂ + 2Spₒₓ → 2Sp_{red} + 2H⁺

The anolyte in its reduced oxidation state is recovered from regeneration section 302 through outlet port 1102 and may be held in a reservoir 1402 before being supplied back to channel 602 for return to the anode 1602. The regenerated (reduced) anolyte passes monitor device 802 which senses the oxidation state of the redox couple within the anolyte solution. Monitor device 802 outputs a signal representative of the oxidation state of the anolyte, indicating whether the oxidation state falls within a pre-set range of oxidation states.

A reductant fuel supply device 1702 is arranged to be responsive to the signal output from monitor device 802. If the signal indicates that the oxidation state has exceeded an upper threshold, the supply device increases the amount of reductant fuel introduced to regeneration section 302. If the signal indicates that the oxidation state has fallen below a lower threshold, the supply device decreases the amount of reductant fuel being introduced to regeneration section 302. The signal may be a continuous signal or may comprise a first signal indicative of crossing the upper threshold in a direction of increasing oxidation level and a second signal indicative of crossing the lower threshold in a direction of the decreasing oxidation level.

As with the embodiment discussed with reference to Figures 1 and 2, the regeneration component is compressed in a compressor before it is supplied to the regenerator section. The compressor used to supply the reductant fuel is likely to have a similar map of efficiency as a function of flow rate and pressure for an air compressor as is demonstrated in Figure 3. As shown in Figure 3, the flow rates at which maximum efficiency can be obtained are significantly greater than the flow rates required in a fuel cell and this is also likely to be the case for a gaseous fuel. As with the oxidant, supplying compressed reductant fuel is a convenient way of introducing the fuel into the electrolyte so that it mixes well.

Operating the fuel cell illustrated in Figures 7 and 8 as described above would result in a similar, but inverted, graph as that illustrated in Figure 5. At time equals 0 seconds, the oxidation state of the electrolyte would be at the lower threshold and the supply of the reductant fuel would be turned off, i.e. the compressor is turned off. The oxidation state increases to the upper threshold over a period of time as the compressor is off and so no reductant fuel is supplied to the anolyte. The oxidation state of the redox couple in the anolyte therefore increases as the redox couple is oxidised at the anode.

When the oxidation state reaches the upper threshold, the monitor device sends a second signal to the supply device which responds by turning the compressor on in order to supply reductant fuel to the anolyte. The compressor is run at one of its most efficient levels and so supplies the reductant fuel at a rate much greater than required to balance the rate of oxidation of the redox couple in the anolyte at the anode. The oxidation state therefore rapidly decreases. Once the oxidation state reaches the lower threshold, the monitor device sends a second signal to the supply device, which responds by turning off the supply of reductant fuel to the anolyte. No reductant fuel is then supplied to the anolyte and so the oxidation state increases once again.

Running the fuel cell in this way would increase the efficiency of a fuel cell in accordance with an embodiment of the present invention, in a similar way to that as illustrated in Figure 6.

As used herein any reference to "one embodiment" or "an embodiment" means that a particular element, feature, structure, or characteristic described in connection with the embodiment is included in at least one embodiment. The appearances of the phrase "in one embodiment" or the phrase "in an embodiment" in various places in the specification are not necessarily all referring to the same embodiment.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the invention. This is done merely for convenience and to give a general sense of the invention. This description should be read to include one or at least one and the singular also includes the plural unless it is obvious that it is meant otherwise.

The embodiments described with reference to Figures 1, 2, 7 and 8 use a single monitor device 801,802 for measuring the oxidation state of the redox couple. However, the embodiments could also work with two or more monitoring devices, which may be placed at various points around the channel 601,602. Appropriate compensation for the delay between the point at which the oxidation state is monitored and that at which the fuel and/or oxidant is supplied may have to be made in the event that the redox couple storage capacity of the electrolyte is insufficient to compensate for or "smooth" the delay.

Additionally, the oxidant supply device 1701 or reductant fuel supply device 1702 may be configured in accordance with predictive control theory to adjust the supply of oxidant or reductant fuel in accordance with a sensed behaviour of a system for which the fuel cell provides energy. For example, in a vehicle system an increase in throttle sensed by one or other of supply advice 1701 or 1702 may result in an increase in the supply of oxidant or reductant fuel in anticipation of the extra consumption of redox couples due to the requirement for increased energy supply consequential to the increase in throttle.

One or more embodiments in accordance with the invention have been described with reference to the supply of an oxidant to the regeneration section 301. Non-limiting examples of such an oxidant may be pure oxygen gas or at least pure within the sense of being industrially supplied and within the bounds of production tolerances, supplied in a mixture of gases such as air or in a compound form from which the oxygen may be released to oxidise the redox couples in the catholyte or combinations of the foregoing. Likewise, one or more embodiments in accordance with the invention have been described with reference to the supply of reductant fuel such as carbon monoxide or hydrogen but other reductants may be used, for example.
For clarity, embodiments in accordance with the invention have been described with reference to a redox couple in the electrolyte. While it is recognized that the electrolyte will comprise a multiplicity of redox couples, such a reference to a single redox couple is indicative of an average oxidation state of the electrolyte or a region of the electrolyte according to context and the specification should be construed accordingly.

In view of the foregoing description it will be evident to a person skilled in the art that various modifications may be made within the scope of the invention. For example, the signal output from the monitor device need not indicative of the oxidation state of the regenerated electrolyte within a range but merely to indicate whether or not the oxidation state exceeds or descends below boundary thresholds of an oxidation state range. Optionally, the signal output from the monitor device may merely indicate whether or not a boundary condition has been exceeded in an upper or lower direction.

Additionally, the decrease in supply of either the oxidant or the fuel by the supply device may be a partial decrease, or the supply may be turned off completely. The increase in supply of either the oxidant or the fuel by the supply device may be an increase to the rate most efficient for the supply device.

Any suitable known cathode material may be used, such as platinum or porous reticulated carbon.

Gaseous oxidants or reductant fuels may be supplied in compressed form from a compressor acting as the supply device. Although the gaseous oxidant or reductant has been introduced through a porous member in order to generate bubbles other methods of mixing include gas sparging, plunging jet mixers, static mixers as well as other techniques well-known in the chemical industry.

The scope of the present disclosure includes any novel feature or combination of features disclosed therein either explicitly or implicitly or any generalisation thereof irrespective of whether or not it relates to the claimed invention or mitigate against any or all of the problems addressed by the present invention. The applicant hereby gives notice that new claims may be formulated to such features during prosecution of this application or of any such further application derived therefrom. In particular, with reference to the appended claims, features from dependent claims may be combined with those of the independent claims and features from respective independent claims may be combined in any appropriate manner and not merely in specific combinations enumerated in the claims.

## Claims

1. A fuel cell assembly comprising:
an electrode in a reaction region, the assembly configured with an electrolyte flow path for flowing communication of an electrolyte with the electrode;
a supply device for controllably supplying a regeneration component to the electrolyte; and
a monitor device operable to monitor the oxidation state of the electrolyte
wherein the electrolyte comprises a redox couple, the oxidation state of which changes with both reaction at the electrode and contact with the regeneration component.

2. The fuel cell assembly according to Claim 1, wherein the monitor device is configured to output a signal representative of the oxidation state of the electrolyte, and optionally
wherein the signal is configured to be indicative of the oxidation state of the electrolyte falling within a range, and/or optionally
wherein the supply device is configured to be responsive to the output of the signal to control supply of the regeneration component to the electrolyte.

3. The fuel cell assembly according to Claim 2, wherein the signal comprises a first component indicative of the oxidation state of the electrolyte exceeding an upper threshold and a second component indicative of the oxidation state of the electrolyte descending a lower threshold.

4. The fuel cell assembly according to Claim 3, wherein the upper and/or the lower thresholds are determined to maximise the efficiency of the change in the oxidation state of the electrolyte when the regeneration component is supplied, and optionally
wherein the upper and lower thresholds respectively define switch parameters for the supply device for supplying the regeneration component to the electrolyte at the optimal rate, and/or optionally
wherein the fuel cell assembly is configured to supply the regeneration component such that the oxidation state of the electrolyte is maintained above the lower threshold, and/or optionally
wherein the fuel cell assembly is configured to supply the regeneration component such that the oxidation state of the electrolyte is maintained below the upper threshold, and/or optionally
wherein the supply device is configured to be responsive to the output of the first component and/or the second component to change supply of the regeneration component to the electrolyte and/or optionally
wherein the first and second components are separate signals, and/or optionally
wherein the signal is an electrical or electronic signal, and/or optionally
wherein the monitor device comprises two units, a first unit configured to output the first component and a second unit configured to output the second component.

5. The fuel cell assembly according to any preceding claim, further comprising a reaction module in the electrolyte flow path, the reaction module including an inlet for the supply of the regeneration component under control of the supply device, and optionally
wherein the monitor device is disposed in the electrolyte flow path between the output of the reaction module and the input to the reaction region, and optionally
wherein the monitor device is disposed proximal the reaction module.

6. The fuel cell assembly according to any preceding claim wherein the supply device is operated at an optimal rate when supplying the regeneration component to the electrolyte, and optionally
wherein, for a period of time, the rate of change of the oxidation state of the electrolyte on contact with the regeneration component is not the same as the rate of change of the oxidation state of the electrolyte on reaction at the electrode.

7. The fuel cell assembly according to any preceding claim, wherein the redox couple comprises a polyoxometallate species, and/or optionally
wherein the regeneration component is gaseous, and optionally
wherein the regeneration component is supplied to the electrolyte as a compressed gas, and optionally
wherein the supply device comprises a gas compressor, and/or optionally
wherein the electrode is a cathode, the reaction region is a cathode region and the electrolyte is a catholyte, and optionally
wherein the regeneration component comprises an oxidant, and optionally
wherein the regeneration component comprises a gas containing oxygen, and optionally
wherein the regeneration component comprises oxygen gas or hydrogen peroxide, and/or optionally
wherein the reaction region comprises one or more electrodes.

8. The fuel cell assembly according to Claim 7, wherein the supply device is configured to be responsive to a signal indicative of the oxidation state of the catholyte exceeding an upper threshold to decrease supply of the regeneration component to the catholyte, and/or optionally
wherein the supply device is configured to be responsive to a signal indicative of the oxidation state of the catholyte descending a lower threshold to increase supply of regeneration component to the catholyte.

9. The fuel cell assembly according to Claim 7 or 8, wherein the oxidation state of the catholyte is maintained above a lower threshold of between 40% and 70% oxidised redox couple, and optionally
wherein the oxidation state of the catholyte is maintained above a lower threshold of 70% oxidised redox couple, and/or optionally
wherein the oxidation state of the catholyte is maintained below an upper threshold of between 60 and 85% oxidised redox couple, and optionally
wherein the oxidation state of the catholyte is maintained below an upper threshold of 80% oxidised redox couple.

10. A method of operating a fuel cell assembly comprising the steps of monitoring an oxidation state of an electrolyte after its reaction at an electrode and changing the supply of a regeneration component in response to the oxidation state of the electrolyte descending a lower threshold and/or exceeding an upper threshold.

11. The method according to Claim 10 wherein the upper and/or the lower thresholds is determined to maximise the efficiency of the change in oxidation state of the electrolyte when the regeneration component is supplied, and/or optionally
wherein the supply device is operated at an optimal rate when supplying the regeneration component to the electrolyte.

12. The method according to Claim 10 or 11, wherein the supply device is configured to be responsive to the output of a signal from the monitor device to control supply of the regeneration component to the electrolyte, and/or optionally
wherein the signal comprises a first component indicative of the oxidation state of the electrolyte exceeding an upper threshold and a second component indicative of the oxidation state of the electrolyte descending a lower threshold, and/or optionally
wherein, for a period of time, the rate of change of the oxidation state of the electrolyte on contact with the regeneration component is not the same as the rate of change of the oxidation state of the electrolyte on reaction at the electrode, and optionally
wherein, for a period of time, the rate of change of the oxidation state of the electrolyte on contact with the regeneration component is greater than the rate of change of the oxidation state of the electrolyte on reaction at the electrode.

13. The method according to any one of Claims 10 to 12, wherein the upper and lower thresholds respectively define switch parameters for the supply device for supplying the regeneration component to the electrolyte at the optimal rate, and optionally
wherein the supply device is switched from a first state to a second state on a signal from the monitor device, and optionally
wherein in the first state, the supply device operates at its optimal rate to supply the regeneration component to the electrolyte and in the second state, no regeneration component is supplied to the electrolyte.

14. The method according to any of Claims 10 to 13, wherein the electrolyte is a catholyte and the supply device is configured to be responsive to a signal indicative of the oxidation state of the catholyte exceeding an upper threshold to decrease supply of the regeneration component to the catholyte and/or wherein the supply device is configured to be responsive to a signal indicative of the oxidation state of the catholyte descending a lower threshold to increase supply of regeneration component to the catholyte, and optionally
wherein the lower threshold is 70% oxidised redox couple and/or the upper threshold is 80% oxidised redox couple, and/or optionally
wherein the electrolyte is an anolyte and the supply device is configured to be responsive to a signal indicative of the oxidation state of the anolyte exceeding an upper threshold to increase supply of the regeneration component to the anolyte and/or wherein the supply device is configured to be responsive to a signal indicative of the oxidation state of the anolyte descending a lower threshold to decrease supply of regeneration component to the anolyte.

15. A method of operating a fuel cell according to any of Claims 1 to 9 comprising the method of any of Claims 10 to 14.

## Patentansprüche

1. Brennstoffzellenanordnung, die Folgendes aufweist:
eine Elektrode in einer Reaktionsregion, wobei die Anordnung mit einem Elektrolytströmungsweg zur Strömungsverbindung eines Elektrolyten mit der Elektrode konfiguriert ist;
eine Zuführvorrichtung zum steuerbaren Zuführen einer Regenerationskomponente zum Elektrolyten und
eine Überwachungsvorrichtung, die zum Überwachen des Oxidationszustands des Elektrolyten funktionell ist,
wobei der Elektrolyt ein Redox-Paar aufweist, dessen Oxidationszustand sich sowohl mit der Reaktion der Elektrode als auch mit Kontakt mit der Regenerationskomponente verändert.

2. Brennstoffzellenanordnung nach Anspruch 1, wobei die Überwachungsvorrichtung zum Ausgeben eines Signals konfiguriert ist, das für den Oxidationszustand des Elektrolyten repräsentativ ist, und wahlweise
wobei das Signal konfiguriert ist, um erkennen zu lassen, dass der Oxidationszustand des Elektrolyten in einen Bereich fällt, und/oder wahlweise
wobei die Zuführvorrichtung konfiguriert ist, um auf die Ausgabe des Signals anzusprechen, um die Zufuhr der Regenerationskomponente zum Elektrolyten zu steuern.

3. Brennstoffzellenanordnung nach Anspruch 2, wobei das Signal eine erste Komponente, die erkennen lässt, dass der Oxidationszustand des Elektrolyten einen oberen Schwellenwert übersteigt, und eine zweite Komponente, die erkennen lässt, dass der Oxidationszustand des Elektrolyten unter einen unteren Schwellenwert abgefallen ist, aufweist.

4. Brennstoffzellenanordnung nach Anspruch 3, wobei der obere und/oder der untere Schwellenwert zum Maximieren des Wirkungsgrads der Veränderung des Oxidationszustands des Elektrolyten, wenn die Regenerationskomponente zugeführt wird, bestimmt ist, und wahlweise
wobei der obere bzw. der untere Schwellenwert Umschaltparameter für die Zuführvorrichtung zum Zuführen der Regenerationskomponente zum Elektrolyten mit der optimalen Rate definiert, und/oder wahlweise
wobei die Brennstoffzellenanordnung konfiguriert ist, um die Regenerationskomponente so zuzuführen, dass der Oxidationszustand des Elektrolyten über dem unteren Schwellenwert gehalten wird, und/oder wahlweise
wobei die Brennstoffzellenanordnung konfiguriert ist, um die Regenerationskomponente so zuzuführen, dass der Oxidationszustand des Elektrolyten unter dem oberen Schwellenwert gehalten wird, und/oder wahlweise
wobei die Zuführvorrichtung konfiguriert ist, um auf die Ausgabe der ersten Komponente und/oder der zweiten Komponente anzusprechen, um die Zufuhr der Regenerationskomponente zum Elektrolyten zu verändern, und/oder wahlweise
wobei die erste und die zweite Komponente separate Signale sind, und/oder wahlweise
wobei das Signal ein elektrisches oder ein elektronisches Signal ist, und/oder wahlweise
wobei die Monitorvorrichtung zwei Einheiten aufweist, eine erste Einheit, die zum Ausgeben der ersten Komponente konfiguriert ist, und eine zweite Einheit, die zum Ausgeben der zweiten Komponente konfiguriert ist.

5. Brennstoffzellenanordnung nach einem der vorhergehenden Ansprüche, die ferner ein Reaktionsmodul im Elektrolytströmungsweg aufweist, wobei das Reaktionsmodul einen Einlass für die Zufuhr der Regenerationskomponente unter der Steuerung der Zuführvorrichtung aufweist, und wahlweise
wobei die Überwachungsvorrichtung im Elektrolytströmungsweg zwischen dem Ausgang des Reaktionsmoduls und dem Eingang zur Reaktionsregion angeordnet ist, und wahlweise
wobei die Überwachungsvorrichtung proximal des Reaktionsmoduls angeordnet ist.

6. Brennstoffzellenanordnung nach einem der vorhergehenden Ansprüche, wobei die Zuführvorrichtung beim Zuführen der Regenerationskomponente zum Elektrolyten mit einer optimalen Rate betrieben wird, und wahlweise
wobei die Rate der Veränderung des Oxidationszustands des Elektrolyten bei Kontakt mit der Regenerationskomponente für eine Zeitspanne nicht die gleiche wie die Rate der Veränderung des Oxidationszustands des Elektrolyten bei Reaktion an der Elektrode ist.

7. Brennstoffzellenanordnung nach einem der vorhergehenden Ansprüche, wobei das Redox-Paar eine Polyoxometallat-Spezies umfasst, und/oder wahlweise
wobei die Regenerationskomponente gasförmig ist, und wahlweise
wobei die Regenerationskomponente dem Elektrolyten als komprimiertes Gas zugeführt wird, und wahlweise
wobei die Zuführvorrichtung einen Gaskompressor aufweist, und/oder wahlweise
wobei die Elektrode eine Kathode ist, die Reaktionsregion eine Kathodenregion ist und der Elektrolyt ein Katholyt ist, und wahlweise
wobei die Regenerationskomponente ein Oxidationsmittel umfasst, und wahlweise
wobei die Regenerationskomponente ein sauerstoffhaltiges Gas umfasst, und wahlweise
wobei die Regenerationskomponente Sauerstoffgas oder Wasserstoffperoxid umfasst, und/oder wahlweise
wobei die Reaktionsregion eine oder mehr Elektroden aufweist.

8. Brennstoffzellenanordnung nach Anspruch 7, wobei die Zuführvorrichtung konfiguriert ist, um auf ein Signal anzusprechen, das erkennen lässt, dass der Oxidationszustand des Katholyten einen oberen Schwellenwert übersteigt, um die Zufuhr der Regenerationskomponente zum Katholyten zu verringern, und/oder wahlweise
wobei die Zuführvorrichtung konfiguriert ist, um auf ein Signal anzusprechen, das erkennen lässt, dass der Oxidationszustand des Katholyten unter einen unteren Schwellenwert abgefallen ist, um die Zufuhr von Regenerationskomponente zum Katholyten zu vergrößern.

9. Brennstoffzellenanordnung nach Anspruch 7 oder 8, wobei der Oxidationszustand des Katholyten über einem unteren Schwellenwert von zwischen 40 % und 70 % oxidiertem Redox-Paar gehalten wird, und wahlweise
wobei der Oxidationszustand des Katholyten über einem unteren Schwellenwert von 70 % oxidiertem Redox-Paar gehalten wird, und/oder wahlweise
wobei der Oxidationszustand des Katholyten unter einem oberen Schwellenwert von zwischen 60 und 85 % oxidiertem Redox-Paar gehalten wird, und wahlweise
wobei der Oxidationszustand des Katholyten unter einem oberen Schwellenwert von 80 % oxidiertem Redox-Paar gehalten wird.

10. Verfahren zum Betreiben einer Brennstoffzellenanordnung, das die Schritte des Überwachens eines Oxidationszustands eines Elektrolyten nach seiner Reaktion an einer Elektrode und des Veränderns der Zufuhr einer Regenerationskomponente als Reaktion darauf, dass der Oxidationszustand des Elektrolyten unter einen unteren Schwellenwert abgefallen ist und/oder einen oberen Schwellenwert übersteigt, aufweist.

11. Verfahren nach Anspruch 10, wobei der obere und/oder der untere Schwellenwert zum Maximieren des Wirkungsgrads der Veränderung des Oxidationszustands des Elektrolyten, wenn die Regenerationskomponente zugeführt wird, bestimmt ist, und/oder wahlweise
wobei die Zuführvorrichtung beim Zuführen der Regenerationskomponente zum Elektrolyten mit einer optimalen Rate betrieben wird.

12. Verfahren nach Anspruch 10 oder 11, wobei die Zuführvorrichtung konfiguriert ist, um auf die Ausgabe eines Signals von der Überwachungsvorrichtung anzusprechen, um die Zufuhr der Regenerationskomponente zum Elektrolyten zu steuern, und/oder wahlweise
wobei das Signal eine erste Komponente, die erkennen lässt, dass der Oxidationszustand des Elektrolyten einen oberen Schwellenwert übersteigt, und eine zweite Komponente, die erkennen lässt, dass der Oxidationszustand des Elektrolyten unter einen unteren Schwellenwert abgefallen ist, aufweist, und/oder wahlweise
wobei die Rate der Veränderung des Oxidationszustands des Elektrolyten bei Kontakt mit der Regenerationskomponente für eine Zeitspanne nicht die gleiche wie die Rate der Veränderung des Oxidationszustands des Elektrolyten bei Reaktion an der Elektrode ist, und wahlweise
wobei die Rate der Veränderung des Oxidationszustands des Elektrolyten bei Kontakt mit der Regenerationskomponente für eine Zeitspanne größer als die Rate der Veränderung des Oxidationszustands des Elektrolyten bei Reaktion an der Elektrode ist.

13. Verfahren nach einem der Ansprüche 10 bis 12, wobei der obere bzw. der untere Schwellenwert Umschaltparameter für die Zuführvorrichtung zum Zuführen der Regenerationskomponente zum Elektrolyten mit der optimalen Rate definiert, und wahlweise
wobei die Zuführvorrichtung auf ein Signal von der Überwachungsvorrichtung hin von einem ersten Zustand auf einen zweiten Zustand umgeschaltet wird, und wahlweise
wobei die Zuführvorrichtung im ersten Zustand mit ihrer optimalen Rate zum Zuführen der Regenerationskomponente zum Elektrolyten betrieben wird und im zweiten Zustand dem Elektrolyten keine Regenerationskomponente zugeführt wird.

14. Verfahren nach einem der Ansprüche 10 bis 13, wobei der Elektrolyt ein Katholyt ist und die Zuführvorrichtung konfiguriert ist, um auf ein Signal anzusprechen, das erkennen lässt, dass der Oxidationszustand des Katholyten einen oberen Schwellenwert übersteigt, um die Zufuhr der Regenerationskomponente zum Katholyten zu verringern, und/oder wobei die Zuführvorrichtung konfiguriert ist, um auf ein Signal anzusprechen, das erkennen lässt, dass der Oxidationszustand des Katholyten unter einen unteren Schwellenwert abgefallen ist, um die Zufuhr von Regenerationskomponente zum Katholyten zu vergrößern, und wahlweise
wobei der untere Schwellenwert 70 % oxidiertes Redox-Paar ist und/oder der obere Schwellenwert 80 % oxidiertes Redox-Paar ist, und/oder wahlweise
wobei der Elektrolyt ein Anolyt ist und die Zuführvorrichtung konfiguriert ist, um auf ein Signal anzusprechen, das erkennen lässt, dass der Oxidationszustand des Anolyten einen oberen Schwellenwert übersteigt, um die Zufuhr der Regenerationskomponente zum Anolyten zu vergrößern, und/oder wobei die Zuführvorrichtung konfiguriert ist, um auf ein Signal anzusprechen, das erkennen lässt, dass der Oxidationszustand des Anolyten unter einen unteren Schwellenwert abgefallen ist, um die Zufuhr von Regenerationskomponente zum Anolyten zu verringern.

15. Verfahren zum Betreiben einer Brennstoffzellenanordnung nach einem der Ansprüche 1 bis 9, das das Verfahren nach einem der Ansprüche 10 bis 14 umfasst.

## Revendications

1. Ensemble pile à combustible comprenant :
une électrode dans une région de réaction, l'ensemble étant configuré avec un trajet d'écoulement d'électrolyte pour la communication par écoulement d'un électrolyte avec l'électrode ;
un dispositif d'alimentation pour alimenter de manière régulable un composant de régénération dans l'électrolyte ; et
un dispositif de surveillance exploitable pour surveiller l'état d'oxydation de l'électrolyte
dans lequel l'électrolyte comprend un couple rédox dont l'état d'oxydation change en fonction à la fois de la réaction au niveau de l'électrode et du contact avec le composant de régénération.

2. Ensemble pile à combustible selon la revendication 1, dans lequel le dispositif de surveillance est configuré pour produire en sortie un signal représentatif de l'état d'oxydation de l'électrolyte, et facultativement
dans lequel le signal est configuré pour indiquer que l'état d'oxydation de l'électrolyte est compris dans une plage, et/ou facultativement
dans lequel le dispositif d'alimentation est configuré pour réagir à la sortie du signal afin de réguler l'alimentation du composant de régénération dans l'électrolyte.

3. Ensemble pile à combustible selon la revendication 2, dans lequel le signal comprend une première composante indiquant que l'état d'oxydation de l'électrolyte dépasse une limite haute et une seconde composante indiquant que l'état d'oxydation de l'électrolyte chute en dessous d'une limite basse.

4. Ensemble pile à combustible selon la revendication 3, dans lequel les limites haute et/ou basse sont déterminées pour maximiser l'efficacité du changement de l'état d'oxydation de l'électrolyte quand le composant de régénération est alimenté, et facultativement
dans lequel les limites haute et basse définissent respectivement des paramètres de commutation du dispositif d'alimentation pour alimenter le composant de régénération dans l'électrolyte au débit optimal, et/ou facultativement
l'ensemble pile à combustible étant configuré pour alimenter le composant de régénération de telle sorte que l'état d'oxydation de l'électrolyte soit maintenu au-dessus de la limite basse, et/ou facultativement
l'ensemble pile à combustible étant configuré pour alimenter le composant de régénération de telle sorte que l'état d'oxydation de l'électrolyte soit maintenu en dessous de la limite haute, et/ou facultativement
dans lequel le dispositif d'alimentation est configuré pour réagir à la sortie de la première composante et/ou de la seconde composante pour changer l'alimentation du composant de régénération dans l'électrolyte et/ou facultativement dans lequel les première et seconde composantes sont des signaux séparés, et/ou facultativement
dans lequel le signal est un signal électrique ou électronique, et/ou facultativement
dans lequel le dispositif de surveillance comprend deux unités, une première unité configurée pour produire en sortie la première composante et une seconde unité configurée pour produire en sortie la seconde composante.

5. Ensemble pile à combustible selon l'une quelconque des revendications précédentes, comprenant en outre un module de réaction dans le trajet d'écoulement d'électrolyte, le module de réaction comportant une entrée pour l'alimentation du composant de régénération sous la commande du dispositif d'alimentation, et facultativement dans lequel le dispositif de surveillance est disposé dans le trajet d'écoulement d'électrolyte entre la sortie du module de réaction et l'entrée dans la région de réaction, et facultativement
dans lequel le dispositif de surveillance est disposé près du module de réaction.

6. Ensemble pile à combustible selon l'une quelconque des revendications précédentes, dans lequel le dispositif d'alimentation est actionné à un débit optimal lors de l'alimentation du composant de régénération dans l'électrolyte, et facultativement dans lequel, pendant une période de temps, le taux de changement de l'état d'oxydation de l'électrolyte au contact avec le composant de régénération n'est pas le même que le taux de changement de l'état d'oxydation de l'électrolyte en réaction avec l'électrode.

7. Ensemble pile à combustible selon l'une quelconque des revendications précédentes,
dans lequel le couple rédox comprend une espèce polyoxométallate, et/ou facultativement
dans lequel le composant de régénération est gazeux, et facultativement dans lequel le composant de régénération est alimenté dans l'électrolyte sous forme de gaz compressé, et facultativement
dans lequel le dispositif d'alimentation comprend un compresseur de gaz, et/ou facultativement
dans lequel l'électrode est une cathode, la région de réaction est une région de cathode et l'électrolyte est un catholyte, et facultativement
dans lequel le composant de régénération comprend un oxydant, et facultativement dans lequel le composant de régénération comprend un gaz contenant de l'oxygène, et facultativement
dans lequel le composant de régénération comprend un gaz d'oxygène ou un peroxyde d'hydrogène, et/ou facultativement
dans lequel la région de réaction comprend une ou plusieurs électrodes.

8. Ensemble pile à combustible selon la revendication 7, dans lequel le dispositif d'alimentation est configuré pour réagir à un signal indiquant que l'état d'oxydation du catholyte dépasse une limite haute afin de réduire l'alimentation du composant de régénération dans le catholyte, et/ou facultativement
dans lequel le dispositif d'alimentation est configuré pour réagi à un signal indiquant que l'état d'oxydation du catholique chute en dessous d'une limite basse afin d'augmenter l'alimentation du composant de régénération dans le catholyte.

9. Ensemble pile à combustible selon la revendication 7 ou 8, dans lequel l'état d'oxydation du catholique est maintenu au-dessus d'une limite basse entre 40 % et 70 % de couple rédox oxydé, et facultativement
dans lequel l'état d'oxydation du catholyte est maintenu au-dessus d'une limite basse de 70 % de couple rédox oxydé, et/ou facultativement dans lequel l'état d'oxydation du catholyte est maintenu en dessous d'une limite haute entre 60 et 85 % de couple rédox oxydé, et facultativement dans lequel l'état d'oxydation du catholyte est maintenu en dessous d'une limite haute de 80 % de couple rédox oxydé.

10. Procédé d'exploitation d'un ensemble pile à combustible comprenant les étapes de surveillance d'un état d'oxydation d'un électrolyte après sa réaction au niveau d'une électrode et de changement de l'alimentation d'un composant de régénération en réaction à une chute de l'état d'oxydation de l'électrolyte en-dessous d'une limite basse et/ou d'un dépassement d'une limite haute.

11. Procédé selon la revendication 10 dans lequel les limites haute et/ou basse sont déterminées pour maximiser l'efficacité du changement de l'état d'oxydation de l'électrolyte quand le composant de régénération est alimenté, et/ou facultativement dans lequel le dispositif d'alimentation est exploité à un débit optimal lors de l'alimentation du composant de régénération dans l'électrolyte.

12. Procédé selon la revendication 10 ou 11, dans lequel le dispositif d'alimentation est configuré pour réagir à la sortie d'un signal depuis le dispositif de surveillance afin de réguler l'alimentation du composant de régénération dans l'électrolyte, et/ou facultativement
dans lequel le signal comprend une première composante indiquant que l'état d'oxydation de l'électrolyte dépasse une limite haute et une seconde composante indiquant que l'état d'oxydation de l'électrolyte chute en dessous d'une limite basse, et/ou facultativement
dans lequel, pendant une période de temps, le taux de changement de l'état d'oxydation de l'électrolyte au contact avec le composant de régénération n'est pas le même que le taux de changement de l'état d'oxydation de l'électrolyte en réaction avec l'électrode, et facultativement
dans lequel, pendant une période de temps, le taux de changement de l'état d'oxydation de l'électrolyte au contact avec le composant de régénération est supérieur au taux de changement de l'état d'oxydation de l'électrolyte en réaction avec l'électrode.

13. Procédé selon l'une quelconque des revendications 10 à 12, dans lequel les limites haute et basse définissent respectivement des paramètres de commutation du dispositif d'alimentation pour alimenter le composant de régénération dans l'électrolyte au débit optimal, et facultativement
dans lequel le dispositif d'alimentation est commuté d'un premier état à un second état à la réception d'un signal depuis le dispositif de surveillance, et facultativement dans lequel dans le premier état, le dispositif d'alimentation fonctionne à son débit optimal pour alimenter le composant de régénération dans l'électrolyte et dans le second état, aucun composant de régénération n'est alimenté dans l'électrolyte.

14. Procédé selon l'une quelconque des revendications 10 à 13, dans lequel l'électrolyte est un catholyte et le dispositif d'alimentation est configuré pour réagir à un signal indiquant que l'état d'oxydation du catholyte dépasse une limite haute afin de réduire l'alimentation du composant de régénération dans le catholyte, et/ou dans lequel le dispositif d'alimentation est configuré pour réagir à un signal indiquant que l'état d'oxydation du catholyte chute en dessous d'une limite basse afin d'augmenter l'alimentation du composant de régénération dans le catholyte, et facultativement, dans lequel la limite basse est 70 % de couple rédox oxydé, et/ou la limite haute est 80% de couple rédox oxydé, et/ou facultativement
dans lequel l'électrolyte est un anolyte et le dispositif d'alimentation est configuré pour réagir à un signal indiquant que l'état d'oxydation de l'anolyte dépasse une limite haute pour augmenter l'alimentation du composant de régénération dans l'anolyte et/ou dans lequel le dispositif d'alimentation est configuré pour réagir à un signal indiquant que l'état d'oxydation de l'anolyte chute en dessous d'une limite basse pour réduire l'alimentation du composant de régénération dans l'anolyte.

15. Procédé d'exploitation d'une pile à combustible selon l'une quelconque des revendications 1 à 9 comprenant le procédé selon l'une quelconque des revendications 10 à 14.
